# EUROPÄISCHE PATENTANMELDUNG

(11) **EP 3 104 140 A1**
(43) Veröffentlichungstag der Anmeldung: **14.12.2016**
(21) Anmeldenummer: 15171239.5
(22) Anmeldetag: 09.06.2015
(51) Int. Cl.: G01G 17/06, G01G 23/00, G01G 23/06

(54) **WASSERFAHRZEUG ZUM TRANSPORT VON FLÜSSIGGAS**

(71) Anmelder: Marine Service GmbH, 20457 Hamburg (DE); Dubai Supply Authority, Dubai (AE)
(72) Erfinder: Schmidt-Lüssmann, Jochen, 21244 Buchholz (DE); Jaerschel, Daniel, 6265 Telfes im Stubai (AT)
(74) Vertreter: Meyer, Ludgerus

(57) **Zusammenfassung**

Die Erfindung betrifft ein Wasserfahrzeug (1) zum Transport von Flüssiggas, insbesondere Flüssigerdgas (LNG) oder Flüssigstickstoff, das in einem oder mehreren fest an Deck des Wasserfahrzeugs verankerten oder mobilen Lager- oder Transportbehältern (2) aufgenommen ist, welche jeweils mit eine Kupplung (3) zur Aufnahme oder Abgabe von Flüssiggas ausgestattet sind, und das mit einer Messeinrichtung zur Erfassung des Inhalts des oder der Lager- oder Transportbehälter (2) versehen ist. Hierbei ist das Gesamtgewicht jedes auf dem Wasserfahrzeug angeordneten Transportbehälters mittels einer Wägeeinrichtung (4) erfassbar.

## Beschreibung

Die Erfindung bezieht sich auf ein Wasserfahrzeug zum Transport von Flüssiggas, insbesondere Flüssigerdgas (LNG) oder Flüssigstickstoff, nach dem Oberbegriff des Anspruchs 1.

In der Schifffahrt wird zunehmend LNG als Treibstoff neben oder als Ersatz für traditionelle Diesel- oder Schweröltreibstoffe verwendet. Der Vorteil von LNG als Treibstoff liegt insbesondere darin, dass damit ein Großteil der Emissionen der Schiffsmotoren vermieden werden kann, die bei der Verwendung von Diesel oder Schweröl entstehen.

Die Lagerung von LNG auf einem Schiff erfolgt in der Regel in mobilen oder stationären Treibstoffcontainern, die über Tankkraftwagen oder von festen Tankstellen aus bebunkert werden. Wenn mobile Transportbehälter verwendet werden, können diese in LNG-Terminals beladen und im gefüllten Zustand wieder auf das Schiff übergeben werden. Leere Transportbehälter können an dem LNG-Terminal entweder direkt befüllt werden oder mittels Transportwagen zu einer gesonderten Befüllstation befördert werden.

Bei größeren Schiffen, insbesondere Seeschiffen, ist es problematisch, die Befüllung der LNG-Transportbehälter an einem eigenen LNG-Terminal vorzunehmen, da eine Bebunkerung mit Kraftstoffen am Lade- und Endladeterminal in der Regel nicht möglich ist. Es sind daher Tankschiffe bekannt geworden, die fest oder mobil an Bord installierte Tanks zur Aufnahme von Flüssigerdgas transportieren, welche an LNG-Terminals befüllt werden können. Derartig mit gefüllten Transportbehältern ausgestattete Bunkerfahrzeuge werden dann an die Seeschiffe herangefahren und das Flüssiggas wird über Füllschläuche an die Lagerbehälter auf dem Seeschiff übertragen. Bei Verwendung von mobilen Transportbehältern können diese am LNG-Terminal auch von dem Bunkerfahrzeug aufgenommen und zum Seeschiff transportiert werden, wo sie auf das Seeschiff übergeben werden.

Aus der DE 60 2005 000 049 T2 ist es bekannt, derartige Pontonschiffe, die selbst keinen eigenen Antrieb haben, zu einer Schubeinheit zusammenzufassen und diese von einem Schubfahrzeug zu einem gewünschten Ort zu überführen. Jedes der Pontonschiffe enthält festinstallierte oder mobile Transportbehälter für Flüssiggas. Mittels geeigneter Pumpeinrichtungen kann das Flüssiggas in die Lagerbehälter eines Seeschiffes übertragen werden, oder alternativ können von dem Pontonschiff transportierte mobile Transportbehälter auf das Seeschiff übergeben werden. Auf einem der Pontonschiffe kann auch eine Energieerzeugungseinrichtung, die durch LNG-Gas betrieben wird, angeordnet sein, die Antriebsenergie für das Schubfahrzeug liefert.

Für den Betrieb von LNG-betriebenen Schiffen ist nicht nur eine größere Menge LNG-Treibstoff erforderlich, sondern es sind häufig auch weitere Gase notwendig, um zusätzliche Versorgungsaufgaben zu erfüllen. Dazu gehört die Versorgung mit flüssigem Stickstoff für ein erstmaliges Abkühlen der Treibstofftanks vor einer Erstbefüllung mit LNG sowie die Versorgung mit gasförmigem Stickstoff, wenn die Schiffstanks mit Inertgas gefüllt werden müssen, z.B. vor der Durchführung von Reparaturarbeiten. Neben den Transportbehältern oder stationären Lagerbehältern für LNG-Gas sind daher auch Transportbehälter oder Lagerbehälter für Flüssigstickstoff erforderlich oder wünschenswert.

Die genaue Kenntnis der in einem Transportbehälter noch vorhandenen oder der aufgenommenen Flüssiggasmengen ist nicht nur für Abrechnungszwecke erforderlich. Im einfachsten Fall erfolgt die Messung der aufgenommenen oder abgegebenen Mengen über die Messung der Füllstände in den Tanks mittels Peilstabeinrichtungen. Der Peilstand hängt allerdings von der Temperatur und der Dichte des Flüssiggases sowie der räumlichen Orientierung des Transportbehälters ab. Dies führt zu Ungenauigkeiten bei der Feststellung der tatsächlichen Mengen. Des Weiteren kann die Messung des Volumens des aufgenommenen oder abgegebenen Flüssiggases auch über Durchflusseinrichtungen erfolgen. Auch hier ergeben sich jedoch Ungenauigkeiten.

Anstelle einer Volumenmessung kann allerdings auch eine Gewichts- oder Massenbestimmung erfolgen. Eine Vorrichtung zur Ermittlung des Gewichts einer Flüssigkeit in einem Tanklastwagen ist z.B. aus der DE 37 17417 C2 bekannt. Dort werden Diffrerenzdruckmesselemente verwendet, die auf Wägezellen wirken und ein dem Differenzdruck im Behälter proportionales Messsignal abgeben. Es ist dort auch ein Mikrorechner angegeben, der die Signale dreier Differenzdruckmesselemente an tiefliegenden Punkten des Behälters auswertet und dabei die Schrägstellung des Behälters berücksichtigt.

Aus der DE 299 20 620 U1 ist ein ähnliches Wägesystem für Lastfahrzeuge bekannt, das drei Wägelager zwischen Aufbau und Chassis des Lastfahrzeugs verwendet. Die Messdaten werden über eine Verrechnungsvorrichtung ausgewertet, angezeigt und abgespeichert.

Die für Lastkraftwagen zu verwendenden Wägezellen lassen sich nicht ohne weiteres zur Verwendung auf Schiffen für Flüssiggasantriebe übertragen. Bei Lastkraftwagen ist die Kenntnis des Füllstandes eines Tanks jeweils nur in Ruhestellung des Lastkraftwagens erforderlich und sinnvoll, um die Menge oder das Gewicht des eingefüllten ober abgegebenen Transportguts zu bestimmen. Die Feststellung des Gewichts des Transportbehälters bzw. dessen Inhalts ist während der Fahrt nicht erforderlich oder aufgrund der Rüttelbewegungen des Lastwagens während einer Fahrt auch gar nicht möglich.

Der Erfindung liegt daher die Aufgabe zugrunde, ein Wasserfahrzeug zum Transport von Flüssiggas, insbesondere Flüssigerdgas (LNG) oder Flüssigstickstoff anzugeben, das in einem oder mehreren fest an Deck des Wasserfahrzeugs verankerten oder mobilen Transportbehältern aufgenommen ist, bei dem eine genaue und einfache Feststellung des Inhalts des oder der Transportbehälter auch während der Fahrt des Wasserfahrzeugs möglich ist.

Diese Aufgabe wird durch die im Anspruch 1 angegebene Erfindung gelöst. Vorteilhafte Weiterbildungen der Erfindung sind in Unteransprüchen angegeben.

Die Erfindung geht aus von einem Wasserfahrzeug zum Transport von Flüssiggas, insbesondere Flüssigerdgas (LNG) oder Flüssigstickstoff, das in einem oder mehreren fest an Deck des Fahrzeuges verankerten oder mobilen Lager- oder Transportbehältern aufgenommen ist, welche jeweils mit einer Kupplung zur Aufnahme oder Abgabe von Flüssiggas ausgestattet sind, und mit einer Messeinrichtung zur Erfassung des Inhalts des oder der Transportbehälter.

Gemäß dem Kennzeichen des Anspruchs 1 wird das Gesamtgewicht jedes auf dem Wasserfahrzeug angeordneten Lager- oder Transportbehälters für Flüssiggas mittels einer Wägeeinrichtung erfasst.

Die erfindungsgemäße Wägeeinrichtung ist vorzugsweise durch wenigstens drei Wägezellen gebildet, die zwischen dem Lager- oder Transportbehälter und dessen Stellplatz auf dem Wasserfahrzeug angeordnet sind.

Die Wägezellen erfassen jeweils die auf die Wägezellen einwirkende Kraft, die durch das Gewicht des Transportbehälters, dessen zugeordnete Bauteile und dessen Inhalt bestimmt ist. Das erfasste Gewicht ist unabhängig von der Temperatur, der Dichte oder dem Druck auf das Flüssiggas. Bei Verwendung von wenigstens drei Wägezellen lässt sich auch die jeweilige Neigung des Lager- oder Transportbehälters erfassen, so dass Roll- oder Stampfbewegungen aus dem Ergebnis herausgerechnet werden können.

Wenn das Gesamtgewicht des Lager- oder Transportbehälters erfasst wird, um das eingelagerte Gewicht des Flüssiggases zu ermitteln, wird das Behältergewicht einschließlich der Aufbauten und weiterer dem Transportbehälter zugeordneten Bauteile von dem Gesamtgewicht subtrahiert. Die Berücksichtigung des Gewichts des Transportbehälters ist bei einer Differenzbildung der Messwerte der Wägeeinrichtung vor und nach einem Einfüll- oder Abgabevorgang von Flüssigkeit nicht erforderlich, wenn nur die Einfüll- oder Abgabemengen erfasst werden sollen.

Vorzugsweise werden die Messwerte der Wägezellen einer zentralen Messwarte zugeführt, in der die Daten der Wägezellen zur Ermittlung der in einem oder den Lager- oder Transportbehältern aufgenommenen Flüssiggasmengen ausgewertet werden. Hierbei ist es auch vorteilhaft, die räumliche Orientierung und die dynamische Bewegung der Lager- oder Transportbehälter zu berücksichtigen. Dadurch wird es möglich, bei Seegang oder Wellenschlag auftretende Roll- oder Stampfbewegungen des Wasserfahrzeugs auszugleichen, so das auch während der Fahrt des Wasserfahrzeugs oder beim Andocken an ein Seeschiff in unruhigem Gewässer eine genaue Feststellung des Inhalts des oder der Lager- oder Transportbehälter möglich ist.

Wenn es gewünscht ist, zusätzlich das Volumen des oder der Lager- oder Transportbehälter zu ermitteln, erfolgt dies insbesondere dadurch, dass aus dem erfassten Gewicht unter Berücksichtigung von Temperatur, Dichte und Luftdruck über die zentrale Messwarte das Volumen errechnet wird.

Das Wasserfahrzeug ist vorzugsweise als Ponton mit oder ohne eigenen Antrieb ausgebildet. Wenn ein solcher Ponton keinen eigenen Antrieb besitzt, kann er von einem Schubfahrzeug geschoben oder gezogen werden, wobei das Schubfahrzeug nach Verbringung des Pontons an eine Abgabestelle andere Aufgaben übernehmen kann, bevor der entladene oder befüllte Ponton wieder abgeholt wird.

Der Ponton weist vorzugsweise einen Stellbereich für eine Mehrzahl von Lager- oder Transpotbehältern auf, die Flüssigerdgas und/oder flüssigen Stickstoff aufnehmen können. Zur Aufnahme oder zur Abgabe des Flüssiggases weisen die Behälter vorzugsweise Trockentrennkupplungen auf, so dass die gefüllten oder entleerten Behälter einfach von Bord entfernt oder darauf abgegeben und am Verbraucher oder Zu- und Ablaufschläuche angeschlossen werden können.

Die Erfindung wird nachstehend anhand eines Ausführungsbeispiels näher erläutert. Es zeigen:
- Fig. 1: eine Seitenansicht eines Pontons nach der Erfindung,
- Fig. 2: eine Aufsicht auf einen Ponton nach der Erfindung.

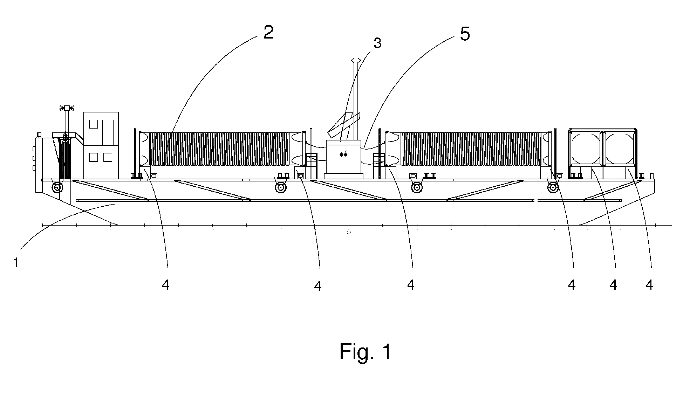

Das in Fig. 1 dargestellte Wasserfahrzeug 1, das ohne eigenen Antrieb ausgebildet ist, enthält auf seiner Deckfläche Stellplätze für zwölf Lager- oder Transportbehälter 2, die über eine Verteileranlage 3 und jeweilige Schlauchverbindungen 5 beladen oder entladen werden können. Zwischen jedem Behälter 2 und der Deckfläche sind an den jeweiligen Standfüßen Wägezellen 4 angeordnet. Bei den Wägezellen 4 handelt es sich im Wesentlichen um an sich bekannte Kraftaufnehmer, die Messsignale erzeugen, die einer zentralen Messwarte zugeführt werden und dort ausgewertet, dargestellt, ausgedruckt oder über diverse Kommunikationswege an andere Stellen übermittelt werden können.

Die Wägezellen können Verankerungsmittel enthalten, um das dem Behälter zugeordnete Teil der Wägezelle fest am Behälter zu verankern und andererseits das dem Chassis zugeordnete Teil fest am Deck des Wasserfahrzeugs zu befestigen. Damit kann sichergestellt werden, dass auch bei rauem Seegang die Lager- oder Transportbehälter fest mit dem Wasserfahrzeug verbunden bleiben. Im reinen Hafenbetrieb wird es ausreichend sein, die Behälter ohne gesonderte Befestigung auf den Wägezellen abzustellen, so dass auch das Entfernen von dem Wasserfahrzeug auf einfache Weise möglich ist.

Um Neigungen, Stampf- oder Rollbewegungen des Wasserfahrzeugs berücksichtigen zu können, sind Neigungs- oder Beschleunigungssensoren vorgesehen, die ihre Messwerte ebenfalls an die zentrale Steuerung übertragen. Durch geeignete rechnerische Verknüpfung der ermittelten Messdaten kann daher bei jedem Zustand des Wasserfahrzeugs kontinuierlich eine genaue Feststellung des Gewichts des oder der Behälter bzw. dessen Inhalts getroffen werden.

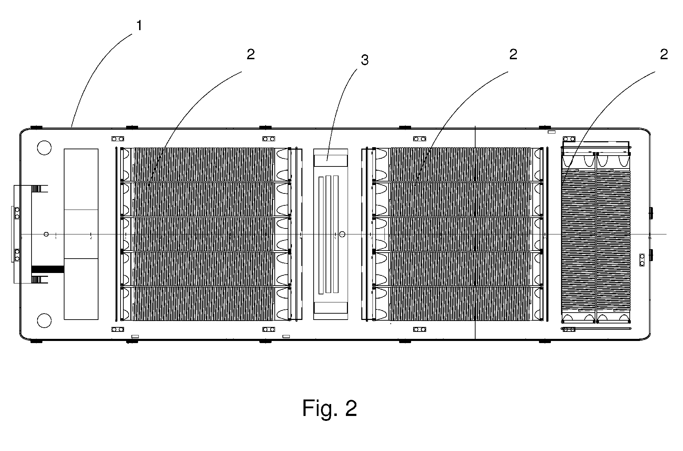

Fig. 2 zeigt ein entsprechendes Wasserfahrzeug in Aufsicht. Es sind insgesamt zwölf mobile Transportbehälter auf der Deckfläche des Wasserfahrzeugs angeordnet, die über die zentrale Verteileranlage 3 miteinander gekoppelt sind. Das Wasserfahrzeug kann auch so umgerüstet werden, dass zumindest an einem Stellplatz eines Behälters ein Verdampfer aufgestellt wird, der mit Umgebungswärme beheizt wird, so dass zugeleitetes Flüssiggas in gasförmigem Zustand an Verbraucher, wie z.B. das Schubfahrzeug oder ein Seeschiff, abgegeben werden kann.

Es kann auf dem Wasserfahrzeug ferner ein Stromaggregat aufgestellt werden, das ebenfalls mit Flüssiggas betrieben wird, um elektrische Energie an andere Verbraucher abzugeben.

Die Verwendung des Wasserfahrzeugs ist nicht auf Flüssigerdgas beschränkt, sondern umfasst auch den Transport und die Gewichtsbestimmung von Flüssigstickstoff oder anderen Gase im flüssigen Zustand, um andere Fahrzeuge damit zu versorgen, beispielsweise wenn deren Tanks von entzündlichen Gasen befreit werden sollen, indem neutrale Gase eingeführt werden.

### Bezugszeichen

- 1: Wasserfahrzeug
- 2: Lager- oder Transportbehälter
- 3: Verteileranlage
- 4: Wägezelle
- 5: Schlauchverbindung

## Patentansprüche

1. Wasserfahrzeug zum Transport von Flüssiggas, insbesondere Flüssigerdgas (LNG) oder Flüssigstickstoff, das in einem oder mehreren fest an Deck des Wasserfahrzeugs (1) verankerten oder mobilen Lager- oder Transportbehältern (2) aufgenommen ist, welche jeweils mit eine Kupplung (3) zur Aufnahme oder Abgabe von Flüssiggas ausgestattet sind, und das mit einer Messeinrichtung zur Erfassung des Inhalts des oder der Lager- oder Transportbehälter versehen ist, **dadurch gekennzeichnet, dass** das Gesamtgewicht jedes auf dem Wasserfahrzeug (1) angeordneten Transportbehälters (2) mittels einer Wägeeinrichtung erfassbar ist.

2. Wasserfahrzeug nach Anspruch 1, **dadurch gekennzeichnet, dass** die Wägeeinrichtung wenigstens drei Wägezellen (4) enthält, die zwischen dem Lager- oder Transportbehälter (2) und dessen Stellplatz auf dem Wasserfahrzeug angeordnet sind.

3. Wasserfahrzeug nach Anspruch 2, **dadurch gekennzeichnet, dass** die Wägezellen (4) zwischen den Standfüßen des Lager- oder Transportbehälters und dessen Stellplatz auf dem Wasserfahrzeug angeordnet sind.

4. Wasserfahrzeug nach Anspruch 1, **dadurch gekennzeichnet, dass** zur Ermittlung des Inhalts eines Lager- oder Transportbehälters (2) von dem über die Wägeeinrichtung erfassten Gewichtswert das Gewicht des leeren Lager- oder Transportbehälters (2) einschließlich ihm zugeordneter Bauteile, die bei der Ermittlung des Gesamtgewichts des Transportbehälters mit erfasst werden, von dem ermittelten Gesamtgewicht subtrahiert wird.

5. Wasserfahrzeug nach Anspruch 1, **dadurch gekennzeichnet, dass** die jeweilige Einfüll- oder Abgabemenge des Flüssiggases eines Lager- oder Transportbehälters (2) durch Differenzbildung der Messwerte der Wägeeinrichtung vor und nach einem Einfüll- oder Abgabevorgang von Flüssiggas ermittelt wird.

6. Wasserfahrzeug nach Anspruch 2 oder Anspruch 3, **dadurch gekennzeichnet, dass** die Messwerte der Wägezellen (4) einer zentralen Messwarte zugeführt werden, in der die Daten der Wägezellen (4) zur Ermittlung der in einem oder den Transportbehältern (2) aufgenommen Flüssiggasmengen ausgewertet werden.

7. Wasserfahrzeug nach Anspruch 6, **dadurch gekennzeichnet, dass** bei der Auswertung auch die räumliche Orientierung und die dynamische Bewegung der Lager- oder Transportbehälter berücksichtigt werden.

8. Wasserfahrzeug nach Anspruch 6, **dadurch gekennzeichnet, dass** aus dem erfassten Gewicht unter Berücksichtigung von Temperatur, Dichte, Luftdruck das Volumen des Inhalts des oder der Lager- oder Transportbehälter (2) ermittelt wird.

9. Wasserfahrzeug nach Anspruch 1, **dadurch gekennzeichnet, dass** es als Ponton mit oder ohne eigenen Antrieb ausgebildet ist.
